# EUROPEAN PATENT APPLICATION

(11) **EP 1 892 447 A1**
(43) Date of publication of application: **27.02.2008**
(21) Application number: 06745709.3
(22) Date of filing: 26.04.2006
(51) Int. Cl.: F16K 49/00, F16K 27/00, F16L 41/02

(54) **FLUID CONTROL DEVICE**

(30) Priority: 17.06.2005 JP 2005177162
(71) Applicant: FUJIKIN INCORPORATED, Osaka-shi, Osaka 550-0012 (JP)
(72) Inventor: SHIKATA, Izuru, c/o FUJIKIN INCORPORATED, Osaka-shi, Osaka 5500012 (JP)
(74) Representative: Paul, Dieter-Alfred
(86) International application number: PCT/JP2006/308731
(87) International publication number: WO 2006/134727

(57) **Abstract**

A fluid control device that does not require a replacement space worth the length even when a rod shaped cartridge heater is used, enables maintenance if the replacement space worth the width is formed, and suppresses increase in the installation area involved therewith is provided.

A concave part 2a opening to the side is formed in the supporting member 2. A heater member 3 is removably inserted from the side and fixed in the concave part 2a of the supporting member 2. The supporting member 2 is formed into a transverse cross section of a horseshoe shape by overlapping two plate shaped members 21, 22. The heater member 3 is inserted into the concave part 2a formed by two plate shaped members 21, 22 and fixed by a hexagon socket head cap screw 26.

## Description

### TECHNICAL FIELD

The present invention relates to a fluid control device used in semiconductor manufacturing apparatus and the like, in particular, to a fluid control device equipped with a heating device.

### BACKGROUND ART

Patent document 1 discloses a device for heating a fluid control device in which a plurality of fluid control equipments are arranged in series in the front and back direction and fixed on a base member, the device including a tape heater serving as a heater member arranged on at least one side of either left or right sides of the fluid control device, and a plurality of brackets including a bottom wall fixed on the base member by a screw member and sides walls for contacting the taper heater to each fluid control equipment.

On the other hand, a cartridge heater is proposed as a heater member for heating the fluid control device, which cartridge heater can respond to high output and is suitable for heating in high temperature process or at areas where tape heater is not suitable.
Patent document 1: Japanese Unexamined Patent Publication No. 10-246356

### DISCLOSURE OF THE INVENTION

### PROBLEMS TO BE SOLVED BY THE INVENTION

In the heating device of patent document 1, the installation area of the fluid control device had to be increased since the portion for attaching the bottom wall of the bracket is necessary in the base material. Such increase in installation area is not preferable in terms of integration, but the installation area increases by the thickness of the tape heater even if the bracket is not used in heating from the side surface by the tape heater.

In order to solve such problem, consideration is made in using the cartridge heater and interposing the same between the plurality of fluid control equipments and the base member, but since the cartridge heater is a rod shape, a replacement space worth the length is required in maintenance such as in replacement in heater break down, whereby design that takes into consideration ensuring of the replacement space in maintenance must be made when using the cartridge heater.

The present invention aims to provide a fluid control device that does not require a replacement space worth the length even when using a rod shaped cartridge heater, enables maintenance if the replacement space worth the width exists, and suppresses increase in installation area involved therewith.

### MEANS FOR SOLVING THE PROBLEMS

The fluid control device according to claim 1 relates to a fluid control device in which a plurality of fluid control equipments arranged in series is supported by a supporting member; where the supporting member is formed with a concave part opening to the side; and a heater member is removably inserted from the side and fixed in the concave part.

The fluid control device basically has a configuration in which the open/close valve is arranged on the entrance side and the exit side of the mass flow controller, and various fluid control equipments such as filter and regulator are added, as necessary. The fluid control equipment may be a block shaped joint member with pipe connecting part arranged at both the entrance and the exit, or a block shaped joint member with a plurality of V shaped passages for communicating the adjacent fluid control equipments.

The supporting member is made of metal such.as stainless steel, and a plurality of screw holes for attaching the fluid control equipment are formed at a predetermined pitch on the upper surface of the supporting member. The supporting member may be formed from one member having a cross section of a horseshoe shape, or may be formed by two members. The supporting member has a length greater than the entire length in the arrangement direction of the plurality of fluid control equipments, and pass through holes for passing screw members to attach the support member to the base member are formed at both ends.

The heater member may be a cartridge heater having an electrically heated wire disposed in a metal pipe, a taper heater in which the electrically heated wire is interweaved in the fiber glass material, or various other types of heaters such as sheath heater, micro heater, plate heater and the like may be used.

The heater member is detachably attached from the side to the concave part formed in the supporting member, and thus the heater member can be replaced if a space worth the width for taking out the heater member in the width direction is obtained.

In the fluid control device according to claim 2, the supporting member is formed into a transverse cross section of a horseshoe shape by overlapping two plate shaped members, and the heater member is inserted to the concave part formed by the two plate shaped members and fixed by the screw members, regarding the device of claim 1.

The supporting member may be formed into a traverse section of a horseshoe shape by overlapping two flat plates by way of a spacer, or may be formed into a transverse section of a horseshoe shape by overlapping two plate shaped members, at least one of which formed with the thick part.

In the fluid control device according to claim 3, one plate shaped member is a flat plate, and the other plate shaped member is a plate with step including a thick part that overlaps and couples with the flat plate and a thin part facing the flat plate with spacing, regarding the device of claim 2.

The thick part of the plate with step is arranged across the entire length in the length direction, so that the supporting member is formed to have a transverse cross section of a horseshoe shape. The heater member, the flat plate and the plate with step have the same length. The coupling between the flat plate and the plate with step are preferably performed by screw members, in which case, pass through holes for inserting the screw members are formed at the overlapping part of the plates, and the coupling of the plates and the attachment of the supporting member to the base member are simultaneously performed when the external thread inserted through the pass through hole is screwed into the screw hole formed in the base member. Similarly, regarding the fixation of the heater member, a pass through hole passing through all of the flat plate, the heater member, and the plate with step is formed, and an external thread inserted through the pass through hole is screwed into a screw hole formed in the base member to simultaneously perform fixation of the heater member and attachment of the heater member and the support member to the base member. The heater member can be taken out in the length direction and in the width direction as long as a space is obtained around the fluid control device.

In the fluid control device according to claim 4, the heater member includes a rod shaped main body, and a heat transmission plate including a heater insertion hole removably inserted with the rod shaped heater main body, the width of the thin part of the plate with step is greater than half the entire width of the plate, and the heater insertion hole is formed so that the rod shaped heater main body is positioned at the center in the width direction of the supporting member, regarding the device of claim 3.

The rod shaped heater main body is, for example, a cartridge heater. The cartridge heater includes a metal pipe having one end closed and the other end opened, an electrically heated wire such as heating element and filling material such as magnesium powder arranged inside the pipe, and an electrode wire connected to the electrically heated wire, and enables high output and high temperature heating. The cartridge heater is, for example, temperature controlled by voltage ON/OFF control by the temperature control. For example, a platinum thin film temperature sensor, sheath K-type thermocouple etc. is used for the temperature control sensor.

The heat transmission plate is made of material having satisfactory heat transmitting property such as aluminum, and the generated heat by the rod shaped heater main body is efficiently transmitted to the supporting member via the heat transmission plate by inserting the rod shaped heater main body into the heater insertion hole in a closely attached manner. The rod shaped heater main body normally has a rod shape of a circular cross section, and thus the heater insertion hole also has a circular cross section. The rod shaped heater main body inserted into the heater insertion hole is fixed by the external thread screwed in from the side surface of the heat transmission plate, for example, and the rod shaped heater main body is supported by the heat transmission plate while being closely contacted to and in a freely removable manner to the peripheral surface of the heater insertion hole. The rod shaped heater main body is positioned exactly at the center in the width direction of the supporting member by having the width of the thin part of the plate with step greater than half the entire width of the plate, and thus uniform heating in the width direction is realized.

A layer of air tends to form between the tape heater and the fluid control equipment, which becomes a heat insulating layer, unless the tape heater is pressed against the fluid control equipment by a clip etc. since the tape heater easily deforms in heating by the tape heater, but the adhesion with the fluid control equipment enhances and the production of the layer of air that becomes the heat insulating layer is prevented by using the rod shaped heater main body in the above configuration.

The fluid control device according to the present invention configures one line of one device (integrated fluid control device), and a plurality of lines is arranged in parallel on the base member at a predetermined interval (line pitch dimension). The integrated fluid control device is used as a gas supply device for semiconductor manufacturing in combination with other devices, and thus has restrictions on the area of the base member and becomes difficult to ensure a sufficient space around the base member. The line pitch dimension must be increased when heating from the side surface of the fluid control equipment by the tape heater, but the line pitch dimension can be reduced by incorporating the heater member in the supporting member having the width necessary for one line as in claim 1. According to the configuration of claim 2, the heater member can be removed in the width direction with the fluid control device installed when replacing the heater member. Therefore, the heater member can be taken out in the width direction and the heater member may be moved to a location not subjected to restriction of space for replacement even if sufficient space is not ensured at the surrounding area, in particular, in the length direction of the base member of the integrated fluid control device.

### EFFECT OF THE INVENTION

According to the fluid control device of claim 1, in the fluid control device in which a plurality of fluid control devices arranged in series is supported by the supporting member, the concave part opening to the side is formed in the supporting member, and the heater member is removably inserted form the side to the concave part, and thus the replacement space worth the width of the heater member is sufficient when replacing the heater member, whereby increase in the installation area is suppressed and miniaturization is achieved.

According to the fluid control device of claim 2, maintenance becomes possible by removing the heater member from the supporting member by removing the screw members fixing the heater member, and replacement is facilitated.

According to the fluid control device of claim 3, the shape of the two plate shaped members may be simplified, thereby lowering the manufacturing cost.

According to the fluid control device of claim 4, uniform heating in the length direction becomes possible by the rod shaped heater main body, and uniform heating in the width direction becomes possible by positioning the heater main body at the center in the width direction of the supporting member, and thus the fluid control device can be uniformly heated at a constant temperature.

### BRIEF DESCRIPTION OF THE DRAWINGS

Fig. 1 is a perspective view of a fluid control device according to the present invention.
Fig. 2 is a perspective view of a fluid control device according to the present invention, showing a state in which a heater member is removed.
Fig. 3 is an exploded view showing the main parts of the fluid control device according to the invention.
Fig. 4 is an assembly view.

### DETAILED DESCRIPTION OF SYMBOLS

(1) fluid control device (line)
(2) supporting member
(2a) concave part
(3) heater member
(11) manual valve (fluid control equipment)
(12) filter (fluid control equipment)
(13) regulator (fluid control equipment)
(14) pressure gauge (fluid control equipment)
(15) entrance side shielding opener (fluid control equipment)
(16) mass flow controller (fluid control equipment)
(17) exit side shielding opener (fluid control equipment)
(21) flat plate (plate shaped member)
(22) plate with step (plate shaped member)
(22c) thin part
(22d) thick part
(23)-(26) hexagon socket head cap screw (screw member).
(31) heat transmission plate
(31a) heater insertion hole
(32) rod shaped heater main body

### BEST MODE FOR CARRYING OUT THE INVENTION

The embodiments of the present invention will now be described with reference to the drawings. In the description below, the top and the bottom of the drawings are respectively referred to as above and below, the right is referred to as front, and the left is referred to as back. Reference to left and right are made in viewing from the front to the back. Front and back, top and bottom, and left and right are used for convenience, and may be used with the front and back reversed, or the top and bottom as left and right.

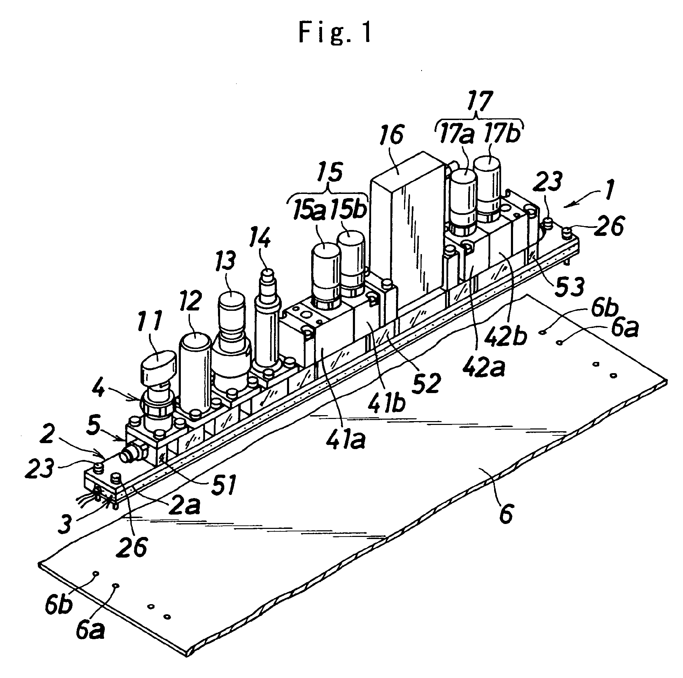

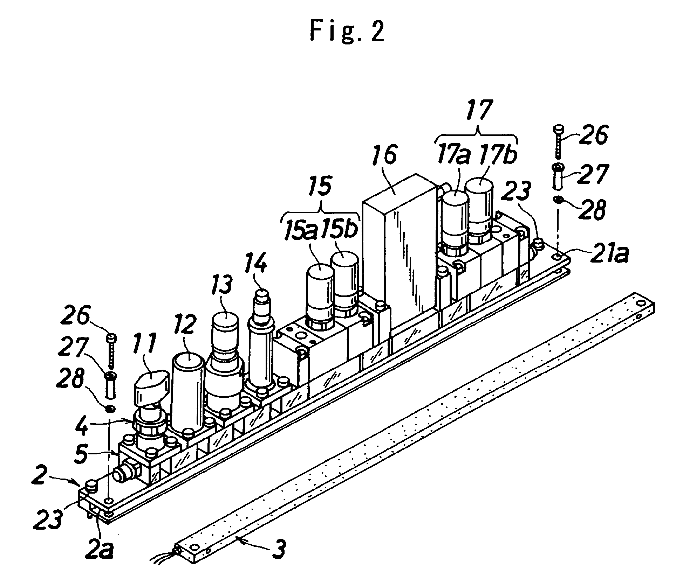

As shown in Figs. 1 and 2, the fluid control device (1) according to the present invention includes a plurality of fluid control equipments (11)(12)(13)(14)(15)(16)(17) arranged in series, a supporting member (2) that has a concave part (2a) opening to the right (side) and that supports the plurality of fluid control equipments (11) (12) (13) (14) (15) (16) (17), and a heater member (3) removably inserted from the right side to the concave part (2a) of the supporting member (2).

The plurality of fluid control equipments (11)(12)(13)(14)(15)(16)(17) are arranged divided into the upper layer (4) and the lower layer (5), where the upper layer (4) includes a mass flow controller (16), a manual valve (11) arranged on the back side (entrance side) of the mass flow controller (16), a filter (12), a regulator (13), a pressure gauge (14) and an entrance side shielding opener (15), and an exit side shielding opener (17) arranged on the front side (exit side) of the mass flow controller (16); and the lower layer (5) includes block shaped joint members (51)(53) with pipe connecting part arranged on both the entrance and the exit, and a block shaped joint member (52) with a plurality of V-shaped passages for communicating the adjacent upper layer components. The entrance side shielding opener (15) includes block shaped main bodies (41a)(41b), and two open/close valve actuators (15a)(15b) attached thereto. The exit side shielding opener (17) includes block shaped main bodies (42a)(42b), and two open/close valve actuators (17a)(17b) attached thereto.

The joint member (fluid control equipment) serving as the lower layer component is fixed at a predetermined interval on the supporting member (2), and the fluid control equipments (11)(12)(13)(14)(15)(16)(17) serving as the upper layer component are arranged across the adjacent joint members (51)(52)(53) in the front and the back direction and are fixed to the corresponding joint members (51)(52)(53) by the screw members.

The supporting member (2) supporting the plurality of fluid control equipments (11)(12)(13)(14)(15)(16)(17) is arranged in parallel to the base member (6), whereby a device (e.g., semiconductor manufacturing gas supply device) including a plurality of fluid control devices (lines) (1) formed by the plurality of fluid control equipments (11) (12) (13) (14) (15) (16) (17) arranged in series is formed.

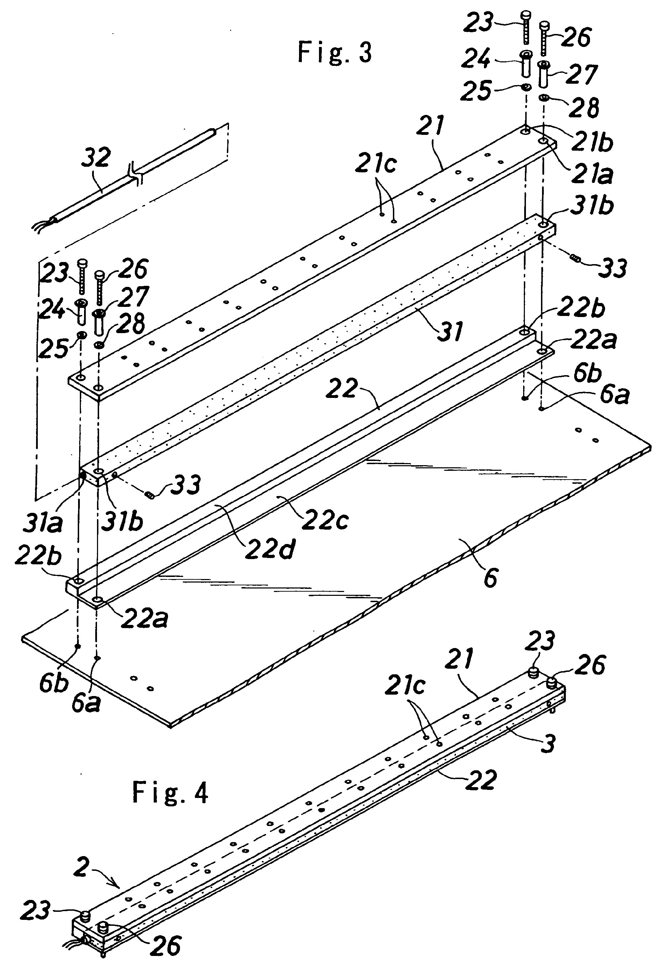

As shown in Figs. 3 and 4, the supporting member (2) includes a flat plate (21) made of stainless steel and a plate with step (22) made of stainless steel that overlaps the lower surface of the flat plate (21).

A plurality of screw holes (21c) for attaching the fluid control equipments (11) (12) (13) (14) (15) (16) (17) is formed in a predetermined pitch on the upper surface of the flat plate (21).

The plate with step (22) includes a thick part (22d) and a thin part (22c), where the thick part (22d) overlaps the flat plate (21), and the thin part (22c) faces the flat plate (21) by way of spacing. The thin part (22c) is arranged across the entire length in the length direction, and the width thereof is made to be greater than half the entire width of the plate. The supporting member (2) is formed to have a transverse section of a horseshoe shape when the plates (21) (22) are overlapped, thereby forming the concave part (2a) for accommodating the heater member (3) between the plates (21) (22) .

The plates (21) (22) have a length longer than the entire length along the arraying direction of the plurality of fluid control equipments (11) (12) (13) (14) (15) (16) (17), and pass through holes (21a)(21b)(22a)(22b) for inserting the screw members (23) (26) to attach the supporting member (2) to the base-member (6) are formed on the left and the right at both ends in the front and the back direction.
The heater member (3) includes a rod shaped heater main body (32) serving as a heat generating section, and a heat transmission plate (31) with a heater insertion hole (31a) removably inserted with the rod shaped heater main body (32).

The cartridge heater is used for the rod shaped heater main body (32). The rod shaped heater main body (32) has a rod shape with a circular cross section, and thus the heater insertion hole (31a) also has a circular cross section. The heater insertion hole (31a) is formed shifted towards the left from the center in the width direction of the heat transmission plate (31). The shifted amount is adjusted so that the rod shaped heater main body (32) is positioned at the center in the width direction of the supporting member (2) when the heater member (3) is attached to the supporting member (2). The rod shaped heater main body (32) inserted to the heater insertion hole (31a) is fixed by an external thread (33) screwed in from the right side surface of the heat transmission plate (31). The rod shaped heater main body (32) is thereby supported by the heat transmission plate (31) while being closely contacted to and in a freely removable manner to the peripheral surface of the heater insertion hole (31a), whereby the generated heat by the rod shaped heater main body (32) is efficiently transmitted to the base member (6) through the heat transmission plate (31). Uniform heating in the width direction becomes possible since the rod shaped heater main body (32) is positioned at the center in the width direction of the supporting member (2).

The heater member (3), the flat plate (21), and the plate with step (22) have the same length.

The supporting member (2) and the base member (6) are connected by hexagon socket head cap screws (23)(26), sleeves (24) (27), and spring washers (25) (28) .

The two (23) on the left of the hexagon socket head cap screw (23) (26) for attaching the supporting member (2) to the base member (6) also function to connect the flat plate (21) and the plate with step (22) of the supporting member (2), and thus the connection between the plates (21)(22) and the attachment of the supporting member (2) to the base member (6) are simultaneously performed by screwing the cap screw (23) inserted to the pass through holes (21b)(22b) formed at the overlapping part of the plates (21)(22) into the screw hole (6b) formed in the base member (6).

The two (26) on the right of the hexagon socket head cap screws (23)(26) for attaching the supporting member (2) to the base member (6) also function to fix the heater member (3) to the supporting member (2). A pass through hole (31b) corresponding to the pass through holes (21a) (22a) on the right side of the flat plate (21) and the plate with step (22) is formed in the heater member (3), and thus the fixation of the heater member (3) and attachment of the heater member (3) and the supporting member (2) to the base member (6) are simultaneously performed by screwing the bolt (26) inserted to the pass through holes (21a)(31b)(22a) for passing all of the flat plate (21), the heater member (3) and the plate with step (22) into the screw hole (6a) formed in the base member (6).

Each hexagon socket head cap screw (23) (26) is used while being inserted to the sleeve (24) (27), and the spring washer (25) (28) is arranged above and below the sleeve (24)(27). Therefore, the spring washer (25) (28) elastically deforms by tightening the hexagon socket head cap screw (23) (26), whereby the flat plate (21) and the plate with step (22) are pushed against the heater member (3), and the heater member (3) and the supporting member (2) are closely attached. The heater member (3) can be taken out in the length direction and in the width direction as long as a space is obtained around the fluid control device (1).

The fluid control device (1) according to the present invention configures one line of one device (integrated fluid control device), and a plurality of lines (1) is arranged in parallel on the base member (6) at a predetermined interval (line pitch dimension). The integrated fluid control device is used as a gas supply device for semiconductor manufacturing in combination with other devices, and thus has restrictions on the area of the base member (6) and becomes difficult to ensure a sufficient space around the base member (6). According to the fluid control device (1) of the present invention, the line pitch dimension is reduced by incorporating the heater member (3) in the supporting member (2) having a width necessary for one line (1) in the above manner. The heater member (3) can be removed from the side from the concave part (2a) formed in the supporting member (2), and thus when replacing the heater member (3), the heater member (3) can be taken out in the width direction with the fluid control equipments (11) (12) (13) (14) (15) (16) (17) in the installed state (state ensuring sealing performance between each equipment (11)(12)(13)(14)(15)(16)(17)) by removing the hexagon socket head cap screw (26) for fixing the heater member with the hexagon socket head cap screw (23) for fixing the base member in a tightened state. Therefore, the heater member (3) can be taken out in the width direction and the heater member (3) may be moved to a location not subjected to restriction of space for replacement even if sufficient space is not ensured at the surrounding area, in particular, in the length direction of the base member (6) of the integrated fluid control device (1).

The supporting member (2) is formed to have a traverse section of a horseshoe shape by overlapping the plate with step (22) including the thick part (22d) and the thin part (22c) and the flat plate (21) in the above embodiment, but the supporting member may be formed into a transverse section of a horseshoe shape by overlapping the plates with step of the same shape including the thick part and the thin part, or the supporting member may be formed into a transverse section of a horseshoe shape by overlapping two flat plates by way of a spacer.

### INDUSTRIAL APPLICABILITY

The fluid control device according to the present invention is a fluid control device in which a plurality of fluid control devices arranged in series is supported by the supporting member, where a concave part opening to the side is formed in the supporting member, and the heater member is removably inserted to the concave part from the side, and thus replacement space worth the width of the heater member is sufficient when replacing the heater member, whereby increase in installation area is suppressed, and miniaturization is achieved.

## Claims

1. A fluid control device in which a plurality of fluid control equipments arranged in series is supported by a supporting member, wherein
the supporting member is formed with a concave part opening to the side, and
a heater member is removably inserted from the side and fixed in the concave part.

2. The fluid control device according to claim 1, wherein
the supporting member has a length greater than the entire length in the arrangement direction of the plurality of fluid control equipments, and
pass through holes for passing screw members to attach the support member to the base member are formed at both ends.

3. The fluid control device according to claim 1, wherein
the supporting member is formed into a transverse cross section of a horseshoe shape by overlapping two plate shaped members, and
the heater member is inserted to the concave part formed by the two plate shaped members and is fixed by the screw members.

4. The fluid control device according to claim 3, wherein
one plate shaped member is a flat plate, and
the other plate shaped member is a plate with step including a thick part that overlaps and couples with the flat plate and a thin part facing the flat plate with spacing.

5. The fluid control device according to claim 4, wherein
a pass through hole passing through all of the flat plate, the heater member, and
the plate with step is formed, and an external thread inserted through the pass through hole is screwed into a screw hole formed in the base member to simultaneously perform fixation of the heater member and attachment of the heater member and the support member to the base member.

6. The fluid control-device according to claim 4, wherein
the heater member includes a rod shaped main body, and a heat transmission plate including a heater insertion hole removably inserted with the rod shaped heater main body,
the width of the thin part of the plate with step is greater than half the entire width of the plate, and
the heater insertion hole is formed so that the rod shaped heater main body is positioned at the center in the width direction of the supporting member.

7. The fluid control device according to claim 6, wherein
the rod shaped heater main body inserted into the heater insertion hole is fixed by the external thread screwed in from the side surface of the heat transmission plate, and
the rod shaped heater main body is supported by the heat transmission plate while being closely contacted to and in a freely removable manner to the peripheral surface of the heater insertion hole.
